(19) **Europäisches Patentamt European Patent Office Office européen des brevets**

(11) **EP 1 219 642 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(51) Int Cl.:
***C08F 2/24*** *(2006.01)*     ***C08F 2/18*** *(2006.01)*

(21) Anmeldenummer: **01128077.3**

(22) Anmeldetag: **27.11.2001**

(54) **Verfahren zur Herstellung von Perlpolymerisaten mit einer mittleren Teilchengrösse im Bereich von 1 bis 40 Mym sowie Perlpolymerisat aufweisende Formmassen, Formkörper und PAMA-Plastisole**

Process for preparing bead polymers with particle size of 1 to 40 mym and molding materials containing this bead polymers, molded materials and PAMA-plastisols

Procédé de préparation de polymères en forme de perles d'un diamètre moyen de 1 à 40 mym et masses de moulage contenant ces polymères en forme de perles, produits moulés et PAMA-plastisols

(84) Benannte Vertragsstaaten:
**AT BE CH CY DE DK ES FI FR GB GR IE IT LI LU MC NL PT SE TR**

(30) Priorität: **28.12.2000 DE 10065501**

(43) Veröffentlichungstag der Anmeldung:
**03.07.2002 Patentblatt 2002/27**

(73) Patentinhaber: **Evonik Röhm GmbH**
**64293 Darmstadt (DE)**

(72) Erfinder:
• **Schultes, Klaus**
**65197 Wiesbaden (DE)**
• **Süfke, Thomas**
**64390 Erzhausen (DE)**
• **Parusel, Markus**
**64409 Messel (DE)**
• **Schmitt, Günter**
**64291 Darmstadt (DE)**
• **Belzner, Winfried**
**63584 Gruendau (DE)**

(56) Entgegenhaltungen:
DE-A1- 19 844 716    GB-A- 722 219
US-A- 5 451 650    US-A- 5 608 017

• **CHEMICAL ABSTRACTS, vol. 92, no. 8, 25. Februar 1980 (1980-02-25) Columbus, Ohio, US; abstract no. 59433, "SUSPENSION POLYMERIZATION AND COPOLYMERIZATION OF METHACRYLIC MONOMERS." Seite 15; Spalte 2; XP002189328 & RO 62 938 A (INTREPRINDEREA CHIMICA "CARBOSIN") 15. März 1978 (1978-03-15)**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft Verfahren zur Herstellung von Perlpolymerisaten mit einer mittleren Teilchengröße im Bereich von 1 bis 40 $\mu$m, bei dem man eine polymerisierbare Zusammensetzung in wäßriger Phase dispergiert und polymerisiert.

Für verschiedene Anwendungen werden Perlpolymerisate benötigt, deren Teilchendurchmesser in der Größenordnung zwischen 1-40 $\mu$m mit einer relativ engen Teilchengrößenverteilung liegen. Diese Perlen können u.a. als Zusätze für PMMA-Formmassen und für PAMA Plastisole verwendet werden.

Insbesondere die lichtstreuenden Formmassen sind als Anwendungsfeld anzusehen. Hier werden Standardformmassen mit sogenannten Streuperlen, welche vernetzt sind und einen anderen Brechungsindex als die Matrix besitzen, abgemischt. Zur Zeit werden in diesen Formmassen Streuteilchen auf PMMA-Basis mit einer Teilchengröße von weit über 40 $\mu$m verwendet. Der Vorteil dieser Streuteilchen liegt in der hohen Vorwärtsstreuung der Formkörper nach der Einarbeitung der Streuteilchen in die Formmassen. Hierdurch wird bei einer hohen Streuung eine im Vergleich zu klassischen Trübungsmitteln wie z.B. BaSO$_4$ oder TiO$_2$ wesentlich höhere Lichtausbeute erzielt, da der Verlust durch Rückwärtsstreuung geringer ist. Diese bevorzugte Vorwärtsstreuung kann durch Messung der Transmission in der Kombination mit dem Energiehalbwertswinkel von Formkörpern, die Streuperlen enthalten, bestimmt werden.

Je kleiner die Teilchengröße der Streuperlen ist, desto höher ist der Streueffekt. Durch Verwendung kleinerer Perlen kann daher deren Menge verringert werden. Dies spart Kosten und schont die Ressourcen. Des weiteren zeigen die mit den kleineren Perlpolymerisaten ausgestatteten Formmassen hervorragende mechanische Eigenschaften, da die verminderte Menge an Streuperlen diese Eigenschaften weniger stark beeinflußt. Werden Streuperlen mit einem Durchmesser kleiner als 5 $\mu$m eingesetzt, nimmt der Gelbeindruck der so hergestellten Formmassen deutlich zu.

Darüber hinaus können die oben beschriebenen Perlen für mattiert ausgestattete Formmassen verwendet werden. Hier werden die vernetzten Perlen mit Standardformmassen abgemischt. Werden diese Formmassen extrudiert, erhält man Gegenstände mit einer samtmatten Oberfläche. Vorteilhaft an matten Oberflächen ist insbesondere, daß man Fingerabdrücke und Schmutz im Vergleich zu glänzenden Oberflächen kaum wahrnimmt. Bei dieser Anwendung ist entscheidend, das die Teilchengrößenverteilung der Perlen eng ist. Je kleiner die Teilchen an sich sind, um feiner wird der Oberflächeneindruck.

Durch einen speziellen Versuch, bei dem eine Lichtstreuteilchen aufweisende PMMA-Gußplatte von der Seite ausgeleuchtet wird, zeigt sich, daß optimale Teilchen eine Größe im Bereich von 5-20 $\mu$m haben, wobei die Größenverteilung möglichst eng sein sollte.

Des weiteren können die obenerwähnten Perlen in Polyalkyl(meth)acrylat(PAMA)-Plastisole eingearbeitet werden. Hier werden die nicht oder sehr gering vernetzten Polymerteilchen, bei denen es sich im allgemeinen um sprühgetrocknete Emulsionspolymerisate und/oder Perlen handelt, in einen Weichmacher gemischt. Hierdurch werden sogenannte Plastisolpasten erhalten. Diese Pasten werden anschließend appliziert und erhitzt, wobei sich die Perlen im Weichmacher auflösen, so daß beim Abkühlen ein sogenannter Plastisolfilm entsteht. Neben anderen Parametern ist für die Plastisolzusammensetzung die Pastenstabilität von entscheidender Bedeutung, da auch vor der Erwärmung der Paste die sogenannte Gelierung auftritt. Um die Pastenstabilität zu erhöhen, werden zur Zeit in Kombination mit den üblichen, sprühgetrockneten Emulsionspolymerisaten PMMA-Perlen mit einem Teilchendurchmesser von ca. 40 $\mu$m in die Pasten eingearbeitet. Diese Perlen haben den Nachteil, daß sie während der kurzen Erhitzungsphase nicht vollständig gelieren. Hierdurch werden inhomogene Plastisolfilme erhalten. Abhilfe kann zur Zeit nur durch eine verlängerte Erhitzungsphase oder durch eine geringe Perlenkonzentration in der Paste erreicht werden.

Durch die Verringerung der Teilchengröße auf Werte im Bereich von 1 - 40 $\mu$m bei gleichzeitig enger Verteilung der Perlen, kann eine größere Anzahl an Perlen in die Paste eingearbeitet werden. Hierdurch wird auch die Pastenstabilität verbessert.

Polymerteilchen in der Größenordnung zwischen 1 - 10 $\mu$m lassen sich über eine Fällungspolymerisation, bei der große Mengen an organischen Lösungsmitteln eingesetzt werden, gut realisieren. Allerdings sind die verwendeten Lösungsmittel sicherheitstechnisch und abfalltechnisch nicht einfach zu handhaben. Auch die Aufarbeitung bereitet Probleme. Daher sind so erhaltene Perlen teuer und werden in den oben dargelegten Anwendungsgebieten aus Kostengründen nicht eingesetzt.

Kostengünstiger lassen sich Polymerperlen durch konventionelle Suspensionspolymerisation gewinnen. Allerdings sind die so erhaltenen Teilchen im allgemeinen größer als 40$\mu$m und zeigen eine breite Verteilung.

Beispielsweise ist aus EP-A-0 443 609 ein Suspensionsverfahren zur Herstellung von Perlpolymerisaten bekannt, bei dem man zwei getrennt zugeführte Phasen (Monomere und kontinuierliche Phase) in einer Mischzelle mit hoher Scherenergie vereinigt und danach die Monomere in einem üblichen Reaktionskessel polymerisiert. Es werden verschiedene Hilfsstoffe zur Stabilisierung der Dispersion genannt. Hierzu gehören unter anderem anorganische Stoffe, wie Calciumphosphat, und organische Verbindungen, wie Cellulosederivate oder Polyvinylalkohol. Die Verwendung von Aluminiumverbindungen wird in EP-A-0 443 609 nicht beschrieben.

In den Beispielen wird dargelegt, daß Teilchengrößen im Bereich von 5 bis 10 $\mu$m erhalten werden.

Allerdings bestand die Monomerenmischung zu 80 Gew.-% aus Styrol. Wiederholt man diese Versuche unter Verwendung von Mischungen, die mehr als 50 Gew.-% acrylische Monomere aufweisen, so tritt eine starke Vergrößerung der Teilchen auf. Bei Verwendung von bekannten organischen Stabilisatoren werden zwar kleine Teilchen erhalten. Verarbeitet man diese Teilchen in Formmassen tritt eine starke Gelbfärbung auf, die zu einer vermehrten Rückstrahlung, also zu einer geringeren Lichtausbeute führt.

Die DE 19844716 beschreibt ein laminiertes, extrudiertes, flächiges Kunststofferzeugnis, das durch Laminieren einer Harzschicht B auf beide Oberflächen einer Harzschicht A erhältlich ist. Die Harzschicht A enthält Perlen, dispergiert in PMMA. Die Teilchen werden über Suspensionspolymerisation hergestellt und mit Windsichten auf eine einheitliche Gewichtsverteilung gebracht, die einer Teilchengröße zwischen 30 und 40 μm entspricht. Die Darstellung von Teilchen mit einer Teilchengröße zwischen 1 und 20 μm wird nicht aufgezeigt.

In der US 5,451,650 wird ein Verfahren zur Herstellung von Lichtstreuteilchen beschrieben. Die Herstellung der hier beschriebenen Fällungspolymerisate ist sehr aufwendig und erfolgt unter Einsatz von organischen Lösungsmitteln, vorzugsweise Cyclohexan. Die Verwendung von Cyclohexan ist unter Sicherheitsaspekten bedenklich.

Die US 5,608,017 beschreibt ein Verfahren zur Suspensionspolymerisation, bei der Partikel mit Kavitäten hergestellt werden. Die so hergestellten Teilchen weisen eine Vielzahl von Hohlräumen auf, die leer oder mit Flüssigkeit gefüllt sein können.

In den Chemical Abstracts vol.92, no. 8, XP 002189328 wird eine Suspensionspolymerisation und Copolymerisation aus Methacryl-Monomeren beschrieben.

In Anbetracht des hierin angegebenen und diskutierten Standes der Technik war es mithin Aufgabe der vorliegenden Erfindung ein Verfahren zur Herstellung von Perlpolymerisaten anzugeben, bei dem man Teilchen mit einer mittleren Größe im Bereich von 1 bis 40 μm, die bei Einarbeitung in Formmassen eine geringe Gelbfärbung zeigen, erhält, ohne daß man ein organisches Lösungsmittel in großen Mengen verwendet, das nach der Polymerisation abgetrennt werden muß und das mit den oben genannten Nachteilen verbunden ist.

Eine weitere Aufgabe der Erfindung bestand darin, ein Verfahren anzugeben, das mit kommerziell erhältlichen Anlagen durchgeführt werden kann.

Des weiteren lag der Erfindung die Aufgabe zugrunde, ein Verfahren bereitzustellen, das ohne größeres Sicherheitsrisiko verwirklicht werden kann. Insbesondere die Freisetzung von umweltschädlichen Stoffen oder deren Handhabung sollte vermieden werden.

Darüber hinaus war es mithin Aufgabe der vorliegenden Erfindung, ein Verfahren bereitzustellen, das kostengünstig ausgeführt werden kann.

Ein weiteres Ziel der vorliegenden Erfindung bestand darin, ein Verfahren der vorgenannten Art anzugeben, bei dem die erhaltene Suspension durch Filtration, insbesondere unter Druck bzw. Vakuum, aufgearbeitet werden kann.

Des weiteren sollten Formmassen, PAMA-Plastisole und Formkörper mit hervorragenden Eigenschaften zur Verfügung gestellt werden, die kostengünstig herstellbar sind.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Maßnahmen. Zweckmäßige Abwandlungen des erfindungsgemäßen Verfahrens werden in den auf Anspruch 1 rückbezogenen Unteransprüchen unter Schutz gestellt.

Dadurch, daß man eine polymerisierbare Zusammensetzung, die mindestens 50 Gew.-% (Meth)acrylate aufweist, in wäßriger Phase dispergiert und polymerisiert, wobei man die mit einer Aluminiumverbindung stabilisierte Dispersion bei einer Schergeschwindigkeit $\geq 10^3$ s$^{-1}$ herstellt, gelingt es ein Verfahren zur Herstellung von hochwertigen Perlpolymerisaten mit einer mittleren Teilchengröße im Bereich von 1 bis 40 μm zur Verfügung zu stellen, ohne daß man ein organisches Lösungsmittel in großen Mengen verwendet, das nach der Polymerisation abgetrennt werden muß.

Durch die erfindungsgemäßen Maßnahmen werden u.a. insbesondere folgende Vorteile erzielt:

➢ Das erfindungsgemäße Verfahren ermöglicht eine Filtration der erhaltenen Perlpolymere.

➢ Das Polymerisationsverfahren der vorliegenden Erfindung kann mit kommerziell erhältlichen Anlagen durchgeführt werden.

➢ Perlpolymerisate können erfindungsgemäß ohne größeres Sicherheitsrisiko erhalten werden, da die Verwendung von organischen Lösungsmitteln nicht oder nur in minimalen Mengen erfolgt. Hierdurch kann insbesondere die Freisetzung von umweltschädlichen Stoffen oder deren Handhabung vermieden werden.

➢ Erfindungsgemäß hergestellte Perlpolymerisate zeigen in Formmassen eingearbeitet und zur Formkörpern geformt einen geringen Gelbwert, eine hohe Transmission und einen großen Energiehalbwertswinkel.

Die im Rahmen der vorliegenden Erfindung herzustellenden Perlpolymerisate weisen eine mittlere Teilchengröße im Bereich von 1 bis 40 μm, vorzugsweise von 5 bis 20 μm auf. Die Teilchengröße bezieht sich auf den Partikeldurchmesser. Dieser Wert kann beispielsweise durch Laserextinktionsverfahren bestimmt werden. Hierzu kann ein CIS-Teilchen-Analysator der Fa. L.O.T. GmbH verwendet werden, wobei die Meßmethode zur Bestimmung der Teilchengröße im Benutzerhandbuch enthalten ist. Diese Methode ist bevorzugt. Darüber hinaus kann die Teilchengröße durch Messen und Auszählen der Teilchen auf entsprechenden Rasterelektronenmikroskop-Aufnahmen ermittelt werden.

Besondere Ausführungsformen der erfindungsgemäß hergestellten Perlpolymerisate zeigen eine enge Größenverteilung. Besonders bevorzugt ist die Standardabweichung vom gemittelten Partikeldurchmesser $\leq 20\mu$m und ganz besonders bevorzugt $\leq 10\mu$m.

In besonderen Ausgestaltungen des erfindungsgemäßen Verfahrens werden sphärische oder kugelförmige Perlpolymerisate hergestellt, die nicht oder nur in geringem Maß koagulieren, aggregieren oder zusammenlagern.

Die zu polymerisierende Zusammensetzung weist mindestens 50 Gew.-% (Meth)acrylat, bezogen auf das Gewicht der Monomeren, auf. Vorzugsweise beträgt der Anteil der (Meth)acrylate mindestens 60 Gew.-% und besonders bevorzugt mindestens 80 Gew.-%, bezogen auf das Gewicht der Monomeren. Der Ausdruck polymerisierbare Zusammensetzung bezeichnet ethylenisch ungesättigte Monomere, die einzeln oder als Mischung eingesetzt werden können.

Der Ausdruck (Meth)acrylate umfaßt Methacrylate und Acrylate sowie Mischungen aus beiden. Diese Monomere sind weithin bekannt.

Zu diesen gehören unter anderem (Meth)acrylate, die sich von gesättigten Alkoholen ableiten, wie beispielsweise Methyl(meth)acrylat, Ethyl(meth) acrylat, Propyl(meth)acrylat, n-Butyl(meth)acrylat, tert.-Butyl(meth)acrylat, Pentyl(meth)acrylat und 2-Ethylhexyl(meth)acrylat;

(Meth)acrylate, die sich von ungesättigten Alkoholen ableiten, wie z. B. Oleyl(meth)acrylat, 2-Propinyl(meth) acrylat, Allyl(meth)acrylat, Vinyl(meth)acrylat;

Aryl(meth)acrylate, wie Benzyl(meth)acrylat oder Phenyl(meth)acrylat, wobei die Arylreste jeweils unsubstituiert oder bis zu vierfach substituiert sein können;

Cycloalkyl(meth)acrylate, wie 3-Vinylcyclohexyl(meth) acrylat, Bornyl(meth)acrylat;

Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat;

Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat;

Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol;

schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid;

mehrwertige (Meth)acrylate, wie Trimethyloylpropantri (meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Im allgemeinen werden diese Verbindungen in einer Menge von 0 bis 50 Gew.-%, vorzugsweise 0 bis 40 Gew.-% und besonders bevorzugt 0 bis 20 Gew.-%, bezogen auf das Gewicht der Monomeren, eingesetzt, wobei die Comonomere einzeln oder als Mischung verwendet werden können.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;

Vinylester, wie Vinylacetat;

Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;

Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;

Vinyl- und Isoprenylether;

Maleinsäurederivate, wie beispielsweise Maleinsäureanhydrid, Methylmaleinsäureanhydrid, Maleinimid, Methylmaleinimid; und

Diene, wie beispielsweise Divinylbenzol.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3, 5, 5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,1 bis 10 Gew.-%, vorzugsweise von 0,5 bis 3 Gew.-%, bezogen auf das Gesamtgewicht der Monomeren, eingesetzt.

Das Verhältnis Wasser zu Monomer liegt üblicherweise im Bereich von 0,4:1 bis 20:1, bevorzugt von 2:1 bis 8:1, bezogen auf das Gewicht der Komponenten.

Zur Stabilisierung der Dispersion ist die Verwendung von Aluminiumverbindungen, die in Wasser schwer löslich sind, notwendig. Hierzu gehören insbesondere Aluminiumoxid $Al_2O_3$ und Aluminiumhydroxid $Al(OH)_3$, wobei $Al(OH)_3$ bevorzugt ist. Von besonderem Interesse ist Aluminiumhydroxid, das durch Fällung hergestellt wird, wobei diese Fällung möglichst kurz vor Bildung der Dispersion erfolgen sollte. In besonderen Ausführungsformen des erfindungsgemäßen Verfahrens erfolgt die Fällung innerhalb von 2 Stunden, vorzugsweise innerhalb von 1 Stunde und ganz besonders bevorzugt innerhalb von 30 Minuten vor Bildung der Dispersion.

Beispielsweise kann $Al_2(SO_4)_3$ in Wasser gelöst werden. Diese Lösung kann anschließend mit einer Natriumcarbonat-Lösung versetzt werden bis der pH-Wert im Bereich von 5 bis 5,5 liegt. Durch diese Vorgehensweise wird eine kolloidale Verteilung der Aluminiumverbindung im Wasser erhalten, die besonders bevorzugt ist.

Die Aluminiumverbindung wird vorzugsweise in einer Menge von 0,5 bis 200 Gew.-%, besonders bevorzugt 3 bis 100 Gew.-% und ganz besonders bevorzugt 4 bis 20 Gew.-%, bezogen auf das Gesamtgewicht der verwendeten Monomere, eingesetzt. Bei Einsatz geringerer Mengen besteht die Gefahr, daß nur eine instabile Dispersion erhalten wird und eine Phasentrennung, zumindest aber die Bildung von größeren Aggregaten eintritt. Werden größere Mengen verwendet, so besteht die Gefahr, daß eine einheitliche Dispersion nicht erzielt werden kann.

Von besonderem Interesse sind auch Verfahren, in denen neben der Aluminiumverbindung weitere Hilfsmittel zur Stabilisierung eingesetzt werden. Hierzu gehören insbesondere oberflächenaktive Stoffe, wie beispielsweise anionische, kationische und neutrale Emulgatoren.

Anionische Emulgatoren sind z.B. Alkalimetallsalze von höheren Fettsäuren mit 8 bis 30 Kohlenstoffatomen, wie Palmitin-, Stearin- und Ölsäure, Alkalimetallsalze von Sulfonsäuren mit beispielsweise 8 bis 30 Kohlenstoffatomen, insbesondere Natriumsalze von Alkyloder Arylalkylsulfonsäuren, Alkalimetallsalze von Halbestern der Phthalsäure, und Alkalimetallsalze von Harzsäuren, wie Abitinsäure.

Kationische Emulgatoren sind unter anderem Salze langkettiger, insbesondere ungesättigter Amine mit 10 bis 20 Kohlenstoffatomen, oder quaternäre Ammoniumverbindungen mit längerkettigen Olefin- oder Paraffinresten.

Neutrale Emulgatoren sind z.B. ethoxylierte Fettalkohole, ethoxylierte Fettsäuren und ethoxylierte Phenole und Fettsäureester von mehrwertigen Alkoholen wie Pentaerythrit oder Sorbit.

Die zuvor genannten Emulgatoren werden vorzugsweise im Bereich von 0 bis 5 Gew.-%, besonders bevorzugt von 0,3 bis 3 Gew.-%, bezogen auf das Gewicht der Aluminiumverbindung, eingesetzt.

Darüber hinaus können der Mischung vor, während oder nach Bildung der Dispersion die üblichen Zusatzstoffe und Hilfsmittel beigefügt werden. Hierzu gehören insbesondere Stoffe, die den Partikeln bestimmte Eigenschaften verleihen, wie Polymere, Farbstoffe und Pigmente, die gegebenenfalls ferromagnetische Eigenschaften aufweisen. Des weiteren können Komplexbildner, wie EDTA oder Trilon A, und Verbindungen, welche die Bildung von Kesselbelag verhindern, wie Polyethylenglykol, eingesetzt werden.

Im Rahmen der vorliegen Erfindung erfolgt das

Dispergieren bei einer Schergeschwindigkeit $\geq 10^3$ s$^{-1}$. Vorzugsweise liegt die Schergeschwindigkeit im Bereich von $10^4$ s$^{-1}$ bis $10^5$ s$^{-1}$. Bei Schergeschwindigkeiten < $10^3$ s$^{-1}$ wird die Teilchengröße des entstehenden Perlpolymerisats größer als 40$\mu$m. Die Schergeschwindigkeit kann als Wert definiert werden, den man erhält, indem man den absoluten Wert der Geschwindigkeitsdifferenz von zwei Ebenen durch die Entfernung zwischen den zwei Ebenen dividiert, wobei sich die zu dispergierende Mischung im Raum zwischen den beiden Ebenen, die einen geringen Abstand von bis zu 6 mm aufweisen, befindet.

Die Herstellung der Dispersion kann mit jedem hierfür geeigneten Verfahren erfolgen. Im allgemeinen werden hierfür Dispergatoren eingesetzt, die dem Fachmann bekannt sind. Hierzu gehören u.a. Dispermat, Fa. VMA-Getzmann, Reichshof; Ultra-Turrax, Fa. Janke und Kunkel, Staufen und Druckhomogenisator, Fa. Gaulin, Lübeck. Des weiteren sind Geräte mit einem Rotor-Stator-System bekannt, etwa Dispax, Fa. Janke und Kunkel, Staufen; Cavitron- Homogenisatoren, Fa. V. Hagen & Funke, Sprochhövel; Homogenisatoren der Fa. Kotthoff, Essen und Homogenisatoren der Fa. Doee Oliver, Grevenbroich. Üblicherweise werden diese Geräte bei Drehzahlen von 1000 bis 25000 min$^{-1}$, bevorzugt 2000 bis 25000 min$^{-1}$ betrieben. Des weiteren können die zur Bildung der Dispersion erforderlichen hohen Scherkräfte ebenso durch Einwirkung von Ultraschall, Hindurchpressen der zu dispergieren Mischung unter hohem Druck durch einen engen Spalt oder durch Düsen kleinen Durchmessers sowie mit Hilfe von Kolloidmühlen erzielt werden.

Das Dispergieren der Monomere sowie der weiteren Bestandteile der Reaktionsmischung findet im allgemeinen bei Temperaturen im Bereich von 0 bis 100°C, vorzugsweise im Bereich von 20 bis 60°C statt, ohne hierauf beschränkt zu sein.

Die Dispergationsdauer kann in einem weiten Bereich in Abhängigkeit vom gewünschten Durchmesser der Monomertröpfchen, von der einzustellenden Größenverteilung und von den Mengenverhältnissen der Mischungsbestandteile liegen. Im allgemeinen kann die Dispersion innerhalb weniger Stunden hergestellt werden.

Das Dispergieren erfolgt im allgemeinen vor Beginn der Polymerisation. Allerdings kann, insbesondere zu Beginn der Polymerisation eine hohe Scherkraft auf die Dispersion einwirken, um eine mögliche Bildung von größeren Aggregaten zu vermeiden. Andererseits sollte die Polymerisation bald nach Bildung der Dispersion erfolgen. Überraschend wurde jedoch festgestellt, daß die durch die Aluminiumverbindung stabilisierte Dispersion über einen relativ großen Zeitraum haltbar ist. Diese Eigenschaft erleichtert die Verwendung üblicher Polymerisationsanlagen, da im Gegensatz zu vielen herkömmlichen Verfahren, zu Beginn der Polymerisation keine Einwirkung von Scherkräften erforderlich ist.

Die Polymerisation kann bei Normaldruck, Unter- od. Überdruck durchgeführt werden. Auch die Polymerisationstemperatur ist unkritisch. Je nach verwendetem Initiatorsystem liegt sie im allgemeinen jedoch im Bereich von 0° - 200°C, vorzugsweise 40° - 130°C und besonders bevorzugt 60° - 120°C, ohne daß hierdurch eine Beschränkung erfolgen soll.

Nach Beendigung der Polymerisation kann die Aluminiumverbindung beispielsweise durch Zugabe von Schwefel- oder Salzsäure in eine wasserlösliche Form überführt werden. Das Perlpolymerisat kann durch Filtration unter Druck vom Wasser abgetrennt werden, ohne daß Probleme auftreten. Werden bekannte organische Verbindungen anstatt der erfindungswesentlichen Aluminiumverbindung zur Stabilisierung der Dispersion eingesetzt, ist eine derartige Filtration aufgrund der rheologischen Eigenschaften der Mischung nicht möglich.

Anwendung finden die erfindungsgemäß erhaltenen Perlpolymerisate in Polyalkyl(meth)acrylat(PAMA)-Plastisolen, die einen weiteren Aspekt der vorliegenden Erfindung darstellen. Diese Plastisole werden durch Einarbeitung der Perlen in bekannte Weichmacher, die unter anderem in EP-A-0 846 726 aufgezählt sind, erhalten.

Die PAMA-Plastisolpasten zeichnen sich durch hervorragende Eigenschaften aus. Sie zeigen insbesondere eine hohe Haltbarkeit. Darüber hinaus können sie einfach verarbeitet werden, wobei sie einen homogenen Plastisolfilm bilden. Dieser Plastisolfilm zeigt eine hervorragende Stabilität und Festigkeit.

Darüber hinaus können die gemäß dem Verfahren der vorliegen Erfindung hergestellten Perlpolymerisate zur Herstellung von Kunststoffen für den Dentalbereich eingesetzt werden. Üblicherweise enthalten Perlen, die diesem Bereich eingesetzt werden, keine Vernetzerkomponenten. Die Herstellung dieser Kunststoffe ist weithin bekannt. Üblicherweise erfolgt diese Herstellung nach dem sogenannten Pulver-Flüssigkeitsverfahren, auch Chemoplastverfahren genannt, unter Heiß- oder Kaltpolymerisation. Hierbei können die erfindungsgemäß herstellbaren Perlen als Mischung mit anderen PMMA-Perlpolymerisaten als Pulverkomponenten verwendet werden.

Darüber hinaus können die erhaltenen Perlen zur Herstellung poröser Kunststofformen, wie diese beispielsweise in der Keramikindustrie Verwendung finden, eingesetzt werden. Die Herstellung dieser Kunststofformen ist an sich bekannt. Hierbei wird die Peroxid enthaltende Pulverkomponente, beispielsweise ein erfindungsgemäß herzustellendes Perlpolymerisat, das auch als Mischung mit anderen Perlpolymerisaten eingesetzt werden kann, unter Einsatz eines Dispergiermittels mit Wasser versetzt. Anschließend wird dieser Dispersion eine Monomermischung zugesetzt, die eine Aminkomponente und einen Emulgator enthält.

Die gemäß dem zuvor beschriebenen Verfahren erhaltenen Perlpolymerisate finden darüber hinaus Verwendung in Formmassen, die ebenfalls Gegenstand dieser Erfindung sind. Als Matrixpolymere eignen sich alle für diesen Zweck bekannten thermoplastisch verarbeitbaren Polymere. Hierzu gehören unter anderem Polyalkyl(meth)acrylate, wie beispielsweise Polymethylmethacrylat (PMMA), Polyacrylnitrile, Polystyrole, Polyether, Polyester, Polycarbonate, Polyvinylchloride. Hierbei sind Polyalkyl(meth)acrylate bevorzugt. Diese Polymere können einzeln sowie als Mischung eingesetzt werden. Des weiteren können diese Polymere auch in Form von Copolymeren vorliegen.

Die Formmassen und die Plastisole können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Aus den zuvor beschriebenen Formmassen können durch bekannte Verfahren, wie beispielsweise Extrusion Formkörper mit matten Oberflächen erhalten werden. Sind die Brechungsindizes von Matrixpolymer Perlpolymerisat unterschiedlich, so können z.B. Abdeckungen für Beleuchtungskörper erhalten werden, die diffuses Licht abstrahlen.

Nachfolgend wird die Erfindung durch Beispiele und Vergleichsbeispiele eingehender erläutert, ohne daß die Erfindung auf diese Beispiele beschränkt werden soll.

Beispiel 1

Zur Herstellung des Suspensionspolymerisats wurde ein Aluminiumhydroxid-Pickering-Stabilisator verwendet, der durch Fällung aus Aluminiumsulfat und Sodalösung unmittelbar vor Beginn der eigentlichen Polymerisation hergestellt wurde. Hierzu wurden zunächst 16 g $Al_2(SO_4)_3$, 0,032 g Komplexbildner (Trilon A) und 0,16 g Emulgator (Emulgator K 30 erhältlich von der Fa. Bayer AG; Natriumsalz eines $C_{15}$-Paraffinsulfonats) in 0,8 l destilliertem Wasser gelöst. Anschließend wurde bei einer Temperatur von ca. 40°C eine 1N Natriumcarbonat-Lösung zu dem in Wasser gelöstem Aluminiumsulfat unter Rühren zugegeben, wobei der pH-Wert anschließend im Bereich von 5 bis 5,5 lag. Durch diese Vorgehensweise wurde eine kolloidale Verteilung des Stabilisators im Wasser erzielt.

Nach der Fällung des Stabilisators wurde die wäßrige Phase in ein Becherglas überführt. Hierzu wurden 110g Methylmethacrylat, 80g Benzylmethacrylat und 10g Allylmethacrylat sowie 4g Dilaurylperoxyd und 0,4g tert.-Butylper-2-ethylhexanoat gegeben. Diese Mischung wurde mittels eines Dispergators (Ultra-Turrax S50N-G45MF, Fa. Janke und Kunkel, Staufen) 15 Minuten bei 7000 U/min dispergiert.

Im Anschluß an die Scherung wurde das Reaktionsgemisch in den Reaktor, welcher auf die entsprechende Reaktionstemperatur von 80 °C vorgeheizt wurde, eingefüllt und bei ca. 80°C (Polymerisationstemperatur) 45 Minuten (Polymerisationsdauer) unter Rühren (600 U/min) polymerisiert. Es folgte eine Nachreaktionsphase von 1 Stunde bei ca. 85°C Innentemperatur. Nach Abkühlen auf 45°C wurde der Stabilisator durch Zusatz von 50%iger Schwefelsäure in wasserlösliches Aluminiumsulfat überführt. Zur Aufarbeitung der Perlen wurde die erhaltene Suspension über ein handelsübliches Filtertuch filtriert und im Wärmeschrank 24 Stunden bei 50°C getrocknet.

Die Größenverteilung wurde durch Laserextinktionsverfahren untersucht. Die Teilchen wiesen eine mittlere Größe $V_{50}$ von 7,1 $\mu$m und eine Standardabweichung von 2,63 $\mu$m auf. Die Perlen hatten eine sphärische Form, wobei keine Fasern festgestellt werden konnten. Koagulation trat nicht auf.

Zur weiteren Untersuchung wurde eine PMMA-Standardformmasse (PLEXIGLAS® 7 N erhältlich von Röhm GmbH) mit 6 Gew.-% der in Beispiel 1 hergestellten Lichtstreuperlen modifiziert. Aus dieser Formmasse wurde durch Spritzguß ein Prüfkörper mit den Maßen 60mm x 45mm x 3mm hergestellt, an dem die Transmission (T) gemäß DIN 5036, der Gelbwert (G) gemäß DIN 6167 und der Energiehalbwertswinkel (β) bestimmt wurden.

Der Energiehalbwertswinkel (β) wurde mit folgender Apparatur bestimmt:

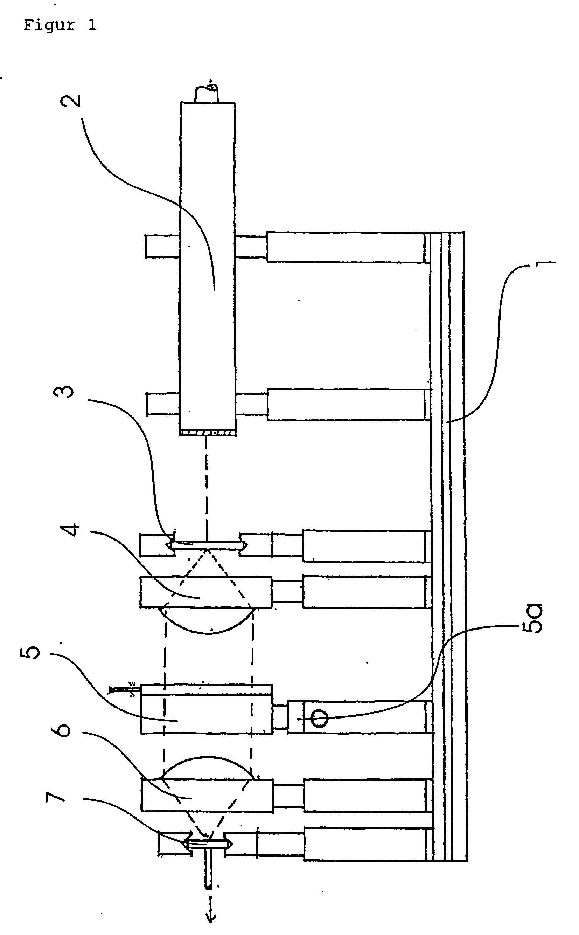

Das Meßgerät besteht aus einer Grundplatte (1) auf die gemäß Figur 1 folgende Komponenten montiert sind:

- He-Ne-Laser mit Strahl-Absperrblende (2)
- Probenhalter (3) im Focus der
- Kondensorlinse (4) mit Durchmesser 55 mm; f = 39 mm
- Irisblende (5) mit max. Durchmesser 60 mm und Höhenanschlag (5a),
- Kondensorlinse (6) mit Durchmesser 55 mm; f = 39 mm mit Focus auf der
- Fotodiode (7)

Ohne Probe und bei geöffneter Strahl-Absperrblende des He-Ne-Laser (2) fällt der ursprünglich im Durchmesser ca. 1 mm messende Laserstrahl in der angegebenen Reihenfolge mittig durch jede Komponente und zentral auf die Fotodiode (7). Bei einer eingebauten, transparenten und lichtstreuenden Probe wird der transmittierte Anteil des Laserstrahls, abhängig vom Streuvermögen der Probe divergent aufgeweitet. Die Kondensorlinse (4) formt daraus einen aufgeweiteten Parallelstrahl von maximal 55 mm Durchmesser, der ungehindert durch die voll geöffnete Irisblende (5) auf die zweite Kondensorlinse (6) und von dieser auf die Sensorfläche der Photodiode (7) fokussiert wird. Ein Meßgerät zeigt den Diodenstrom an, der dem Lichtstrom proportional ist. Schließt man die Irisblende (5) langsam, dann eliminiert diese von außen her zunehmend Lichtstrahlen und die angezeigte Stromstärke nimmt ab. Der Blendendurchmesser, bei dem die Hälfte der ursprünglichen Stromstärke angezeigt wird, charakterisiert den Energiehalbwertswinkel (β).

Die Bestimmungsgleichung hierzu lautet:

$$\beta = \arctan \frac{D}{2f}$$

mit

D =   Blendendurchmesser bei halber Stromstärke in mm,

f =   Brennweite der Kondensorlinse = 39 mm.

Die so erhaltenen Daten sind in Tabelle 1 dargestellt.

Vergleichsbeispiel 1

Das Beispiel 1 wurde im wesentlichen wiederholt, außer daß 24 g tri-Calciumphosphat anstatt des frisch gefällten Aluminiumhydroxids eingesetzt wurden.

Die Größenverteilung des so erhaltenen Perlpolymerisats wurde durch Laserextinktionsverfahren untersucht. Die Teilchen wiesen eine mittlere Größe $V_{50}$ von 56,9 $\mu$m und eine Standardabweichung von 20,8 $\mu$m auf.

Beispiel 2

Das Beispiel 1 wurde im wesentlichen wiederholt, wobei jedoch jeweils die 80fachen Mengen der Bestandteile eingesetzt wurden. Hierdurch mußten einige technisch bedingte Änderungen vorgenommen werden. Der gefällte Pikeringstabilisator wurde mit Monomeren, Initiator und Zusatzstoffen im Reaktor vorgelegt und anschließend bei einer Temperatur von 40 °C mit Hilfe eines Durchflußdispergators (Dispax-Reaktor, Fa. Janke und Kunkel) dispergiert. Hierzu wurde die Mischung 30 Minuten zyklisch durch den Dispergator geführt, wobei die Dispersion innerhalb des Reaktors mit einem konventionellen Rührer bei 150 U/min gerührt wurde.

Nach 30 Minuten wurde die Dispersion auf 80°C erwärmt. Die Polymerisation und Aufarbeitung erfolgte gemäß Beispiel 1.

Die Größenverteilung des so erhaltenen Perlpolymerisats wurde durch Laserextinktionsverfahren untersucht. Die Teilchen wiesen eine mittlere Größe $V_{50}$ von 16,3 $\mu$m und eine Standardabweichung von 4,6 $\mu$m auf.

Zur weiteren Untersuchung wurde eine PMMA-Standardformmasse (PLEXIGLAS® 7 N erhältlich von Röhm GmbH) mit 6 Gew.-% der in Beispiel 2 hergestellten Lichtstreuperlen modifiziert. Aus dieser Formmasse wurde durch Spritzguß ein Prüfkörper mit den Maßen 60mm x 45mm x 3mm hergestellt, an dem die in Beispiel 1 beschriebenen Größen bestimmt wurden. Die so erhaltenen Daten sind in Tabelle 1 dargestellt.

Vergleichsbeispiel 2

Das Beispiel 1 wurde im wesentlichen wiederholt, außer daß 3,2 g Mowiol 4088, ein von der Fa. Clariant GmbH erhältlicher organischer Stabilisator, anstatt des frisch gefällten Aluminiumhydroxids eingesetzt wurden.

Die Herstellung der Dispersion und die Polymerisation erfolgte gemäß Beispiel 1. Aufgrund der rheologischen Eigenschaften der Mischung konnte die Zusammensetzung nicht über eine Druckfiltration aufgearbeitet werden.

Die Größenverteilung des so erhaltenen Perlpolymerisats wurde durch Laserextinktionsverfahren untersucht. Die Teilchen wiesen eine mittlere Größe $V_{50}$ von 4,56 $\mu$m und eine Standardabweichung von 1,41 $\mu$m auf.

Zur weiteren Untersuchung wurde eine PMMA-Standardformmasse (PLEXIGLAS® 7 N erhältlich von Röhm GmbH) mit 6 Gew.-% der in Vergleichsbeispiel 2 hergestellten Lichtstreuperlen modifiziert. Aus dieser Formmasse wurde durch Spritzguß ein Prüfkörper mit den Maßen 60mm x 45mm x 3mm hergestellt, an dem die in Beispiel 1 beschriebenen Größen bestimmt wurden. Die so erhaltenen Daten sind in Tabelle 1 dargestellt.

Vergleichsbeispiel 3

Polymere mit einer Zusammensetzung gemäß Beispiel 1 wurden durch ein in DE-A-43 27 464 beschriebenes Fällungsverfahren in Cyclohexan hergestellt.

Die Teilchen wiesen eine mittlere Größe von 6 $\mu$m und eine Standardabweichung von 1,41 $\mu$m auf. Diese Werte wurden über rasterelektronenmikroskopische Aufnahmen bestimmt, wobei einzelne Teilchen gemessen und deren Zahl bestimmt wurden.

Zur weiteren Untersuchung wurde eine PMMA-Standardformmasse (PLEXIGLAS® 7 N erhältlich von Röhm GmbH) mit 6 Gew.-% der in Vergleichsbeispiel 3 hergestellten Lichtstreuperlen modifiziert. Aus dieser Formmasse wurde durch Spritzguß ein Prüfkörper mit den Maßen 60mm x 45mm x 3mm hergestellt, an dem die in Beispiel 1 beschriebenen Größen bestimmt wurden. Die so erhaltenen Daten sind in Tabelle 1 dargestellt.

Tabelle 1

|  | T [%] | G [%] | β [°] |
|---|---|---|---|
| Beispiel 1 | 76,3 | 9,4 | 22,5 |
| Beispiel 2 | 91,1 | 2,9 | 18,5 |
| Vergleichsbsp. 2 | 71,9 | 28,2 | - |
| Vergleichsbsp. 3 | 77 | 9,5 | 23,1 |

Die Prüfergebnisse in Tabelle 1 zeigen, daß die Streuperlen, eincompoundiert in Formmassen und gemäß dem Verfahren der vorliegen Erfindung hergestellt (Beispiel 1 und 2), das Licht ohne großen Energieverlust sehr gut streuen. Des weiteren zeigen diese Formmassen Vorteile gegenüber den Streuperlen, die gemäß Vergleichsbeispiel 2 erhalten wurden. Zwar wird das Licht durch Einsatz des Streumittels stark gestreut, allerdings steigt dabei der Gelbwert G stark an und die Transmission T ist deutlich geringer als bei den Formmassen, die mit Streuperlen gemäß Beispiel 1 oder 2 modifiziert wurden. Eine starke Rückwärtsstreuung ist einem hohen Energieverlust gleichzusetzen. Dies ist auf die Zersetzung des verwendeten organischen Verteilers zurückzuführen. Die optischen Eigenschaften sind bei Beispiel 1 und Vergleichsbeispiel 3 fast identisch. Nachteilig bei Vergleichsbeispiel 3 ist das Herstellungsverfahren der hier eingesetzten Streuperlen. Diese werden über eine Fällungspolymerisation in Cyclohexan hergestellt. Aufgrund der Morphologie der so hergestellten Perlen ist das Trocknungsverfahren aufwendig, wobei das Trocknungsverfahren wegen des organischen Lösungsmittels sicherheitstechnische Probleme bereitet.

**Patentansprüche**

1. Verfahren zur Herstellung von Perlpolymerisaten mit einer mittleren Teilchengröße im Bereich von 1 bis 40 $\mu$m, bei dem man eine polymerisierbare Zusammensetzung, die mindestens 50 Gew.-% (Meth) acrylate aufweist, in wäßriger Phase dispergiert und polymerisiert, **dadurch gekennzeichnet, daß** man die mit einer Aluminiumverbindung stabilisierte Dispersion bei einer Schergeschwindigkeit $\geq 10^3$ s$^{-1}$ herstellt.

2. Verfahren gemäß Anspruch 1, **dadurch gekennzeichnet, daß** man Al(OH)$_3$ zur Stabilisierung ein-

setzt.

3. Verfahren gemäß Anspruch 2, **dadurch gekennzeichnet, daß** man das Al(OH)$_3$ durch Fällung herstellt.

4. Verfahren gemäß einem oder mehreren der vorhergehenden Ansprüche, **dadurch gekennzeichnet, daß** die Konzentration der Aluminiumverbindung, bezogen auf das Gewicht der polymerisierbaren Zusammensetzung, im Bereich von 0,5 bis 200 Gew.-% liegt.

5. Verfahren gemäß Anspruch 4, **dadurch gekennzeichnet, daß** die Konzentration der Aluminiumverbindung, bezogen auf das Gewicht der polymerisierbaren Zusammensetzung, im Bereich von 3 bis 100 Gew.-% liegt.

6. Verfahren gemäß Anspruch 5, **dadurch gekennzeichnet, daß** die Konzentration der Aluminiumverbindung, bezogen auf das Gewicht der polymerisierbaren Zusammensetzung, im Bereich von 4 bis 20 Gew.-% liegt.

7. Verfahren gemäß einem oder mehreren der vorhergehenden Ansprüche, **dadurch gekennzeichnet, daß** die Teilchengröße im Bereich von 5 bis 20 $\mu$m liegt.

8. Verfahren gemäß einem oder mehreren der vorhergehenden Ansprüche, **dadurch gekennzeichnet, daß** die polymerisierbare Zusammensetzung mindestens 60 Gew.-% (Meth)acrylate aufweist.

9. Verfahren gemäß einem oder mehreren der vorhergehenden Ansprüche, **dadurch gekennzeichnet, daß** man zusätzlich einen Emulgator einsetzt.

10. Verfahren gemäß Anspruch 9, **dadurch gekennzeichnet, daß** die Konzentration des Emulgators, bezogen auf das Gewicht der Aluminiumverbindung, im Bereich von 0 bis 5 Gew.-% liegt.

11. Verfahren gemäß Anspruch 10, **dadurch gekennzeichnet, daß** die Konzentration des Emulgator, bezogen auf das Gewicht der Aluminiumverbindung, im Bereich von 0,3 bis 3 Gew.-% liegt.

12. Verfahren gemäß einem oder mehreren der vorhergehenden Ansprüche, **dadurch gekennzeichnet, daß** man die nach der Polymerisation erhaltene Dispersion filtriert.

**Claims**

1. Process for preparing bead polymers with an average particle size in the range from 1 to 40 $\mu$m, in which a polymerizable mix which comprises at least 50% by weight of (meth)acrylates is dispersed in an aqueous phase and polymerized, **characterized in that** the dispersion, stabilized using an aluminium compound, is prepared at a shear rate $\geq 10^3$ s$^{-1}$.

2. Process according to Claim 1, **characterized in that** the stabilization is achieved using Al(OH)$_3$.

3. Process according to Claim 2, **characterized in that** the Al(OH)$_3$ is prepared by precipitation.

4. Process according to one or more of the preceding claims, **characterized in that** the concentration of the aluminium compound, based on the weight of the polymerizable mix, is in the range from 0.5 to 200% by weight.

5. Process according to Claim 4, **characterized in that** the concentration of the aluminium compound, based on the weight of the polymerizable mix, is in the range from 3 to 100% by weight.

6. Process according to Claim 5, **characterized in that** the concentration of the aluminium compound, based on the weight of the polymerizable mix, is in the range from 4 to 20% by weight.

7. Process according to one or more of the preceding claims, **characterized in that** the particle size is in the range from 5 to 20 $\mu$m.

8. Process according to one or more of the preceding claims, **characterized in that** the polymerizable mix comprises at least 60% by weight of (meth)acrylates.

9. Process according to one or more of the preceding claims, **characterized in that** use is also made of an emulsifier.

10. Process according to Claim 9, **characterized in that** the concentration of the emulsifier, based on the weight of the aluminium compound, is in the range from 0 to 5% by weight.

11. Process according to Claim 10, **characterized in that** the concentration of the emulsifier, based on the weight of the aluminium compound, is in the range from 0.3 to 3% by weight.

12. Process according to one or more of the preceding claims, **characterized in that** the dispersion obtained from the polymerization is filtered.

**Revendications**

person obtenue après la polymérisation.

1. Procédé pour la préparation de polymères en perle présentant une grosseur moyenne des particules dans la plage de 1 à 40 μm, dans lequel on disperse une composition polymérisable, qui présente au moins 50% en poids de (méth)acrylates, en phase aqueuse et on polymérise, **caractérisé en ce qu'**on prépare la dispersion stabilisée avec un composé d'aluminium à une vitesse de cisaillement ≥ 10³ s⁻¹.

2. Procédé selon la revendication 1, **caractérisé en ce qu'**on utilise Al(OH)₃ pour la stabilisation.

3. Procédé selon la revendication 2, **caractérisé en ce qu'**on prépare Al(OH)₃ par précipitation.

4. Procédé selon l'une ou plusieurs des revendications précédentes, **caractérisé en ce que** la concentration en composé d'aluminium, par rapport au poids de la composition polymérisable, se situe dans la plage de 0,5 à 200% en poids.

5. Procédé selon la revendication 4, **caractérisé en ce que** la concentration en composé d'aluminium, par rapport au poids de la composition polymérisable, se situe dans la plage de 3 à 100% en poids.

6. Procédé selon la revendication 5, **caractérisé en ce que** la concentration en composé d'aluminium, par rapport au poids de la composition polymérisable, se situe dans la plage de 4 à 20% en poids.

7. Procédé selon l'une ou plusieurs des revendications précédentes, **caractérisé en ce que** la grosseur des particules se situe dans la plage de 5 à 20 μm.

8. Procédé selon l'une ou plusieurs des revendications précédentes, **caractérisé en ce que** la composition polymérisable présente au moins 60% en poids de (méth)acrylates.

9. Procédé selon l'une ou plusieurs des revendications précédentes, **caractérisé en ce qu'**on utilise en outre un émulsifiant.

10. Procédé selon la revendication 9, **caractérisé en ce que** la concentration en émulsifiant, par rapport au poids du composé d'aluminium, se situe dans la plage de 0 à 5% en poids.

11. Procédé selon la revendication 10, **caractérisé en ce que** la concentration en émulsifiant, par rapport au poids du composé d'aluminium, se situe dans la plage de 0,3 à 3% en poids.

12. Procédé selon l'une ou plusieurs des revendications précédentes, **caractérisé en ce qu'**on filtre la dis-

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0443609 A
- DE 19844716
- US 5451650 A
- US 5608017 A
- EP 0846726 A
- DE 4327464 A